# EUROPÄISCHE PATENTSCHRIFT

(11) **EP 1 860 492 B1**
(45) Veröffentlichungstag und Bekanntmachung des Hinweises auf die Patenterteilung: **05.05.2010**
(21) Anmeldenummer: 06010768.7
(22) Anmeldetag: 24.05.2006
(51) Int. Cl.: G03B 5/00, H04N 5/225, H04N 5/335

(54) **Verfahren zur Raumfilterung und Bildaufnahmegerät**
Method of spatial filtering and image capture device
Procédé de filtrage spatial et dispositif de capture d'images

(43) Veröffentlichungstag der Anmeldung: 28.11.2007
(73) Patentinhaber: Gerd Stueckler, 83684 Tegernsee (DE)
(72) Erfinder: Gerd Stueckler, 83684 Tegernsee (DE)
(74) Vertreter: Hössle Kudlek & Partner

(56) Entgegenhaltungen:
- EP-A- 1 143 713
- JP-A- 1 130 677
- JP-A- 6 018 329
- JP-A- 8 234 336
- JP-A- 9 326 961
- JP-A- 10 229 525
- JP-A- 2004 271 694
- US-A- 5 834 761
- US-A- 5 915 047
- US-A1- 2004 012 708
- US-A1- 2004 201 773
- US-A1- 2004 240 871

## Beschreibung

Die Erfindung betrifft ein Verfahren zur Ortsfrequenzfilterung sowie ein Bildaufnahmegerät nach den Oberbegriffen der unabhängigen Patentansprüche.

Im folgenden wird im wesentlichen auf Filmkameras Bezug genommen, ohne dass die Erfindung darauf beschränkt wäre. Es versteht sich, dass das erfindungsgemäße Verfahren z. B. ebenso für Fotokameras oder andere Bildaufnahmegeräte anwendbar ist.

### Stand der Technik

Um ein möglichst naturgetreues und artefaktfreies Bild aufnehmen zu können, sind Kameras mit optoelektronischen Bildsensoren, die eine regelmäßige Pixelanordnung aufweisen, mit einer optischen Vorfilterung bzw. Ortsfrequenzfilterung ausgestattet. Die optische Vorfilterung ist bei Bildsensoren prinzipiell erforderlich, wenn Alias-Effekte vermieden werden sollen. Die sog. Alias-Strukturen können auch nicht nachträglich bspw. mittels digitaler Filterung der Pixeldaten entfernt werden, da die digitalen Daten keine Unterscheidung zwischen Alias-Strukturen und Bildszenen-Strukturen zulassen.

Der theoretische Hintergrund ist im Zusammenhang mit dem Nyquist-Shannon-Abtasttheorem bekannt. Die Nyquist-Frequenz wird durch die halbe Abtastfrequenz definiert.

Die optische Vorfilterung bzw. Ortsfrequenzfilterung sollte daher alle Strukturen des auf den Bildsensor vom Objektiv projizierten Abbilds der aufzunehmenden Szene, welche feiner als der halbe Abstand zwischen zwei benachbarten Pixeln gleicher spektraler Lichtempfindlichkeit sind, möglichst vollständig unterdrücken und alle gröberen Strukturen möglichst nicht unterdrücken. Da dies technisch unmöglich ist, muss immer ein Kompromiss zwischen der Unterdrückung von Alias-Artefakten und einer möglichst hohen Bildschärfe eingegangen werden.

Die Lichtempfindlichkeit eines theoretischen, idealen Pixels eines Bildsensors sollte mit zunehmendem Abstand vom seinem Mittelpunkt aus abnehmen, wobei aber auch noch die Orte von Nachbarpixeln mit erfasst werden. Die entsprechende richtungsabhängige Kurve hängt sowohl vom ortsabhängigen Verlauf der Lichtempfindlichkeit eines realen Sensorpixels als auch von der geometrischen Anordnung der Sensorpixel zueinander und auch von dem gewünschten Kompromiss zwischen hoher Bildschärfe und hoher Unterdrückung von Aliasartefakten ab. Ein ideales optisches Vorfilter sollte das Licht des Abbilds so auf ein reales Sensorpixel verteilen, dass dieses den Lichtempfindlichkeitsverlauf des idealisierten Pixels soweit als möglich aufweist.

Im Stand der Technik existieren hierzu unterschiedliche Lösungen. Es gibt digitale Bildaufnahmegeräte, bei denen allein durch die Unschärfe des Objektivs der Lichtempfindlichkeitsverlauf der Sensorpixel relativ zum Abbild verändert wird. Da hiermit in keinem Fall der gewünschte Verlauf erzielt werden kann, werden in der Regel jedoch speziell für diesen Zweck ausgestaltete optische Filter verwendet. So werden vor den Sensorpixeln angeordnete Zerstreuungsscheiben, welche die auftreffenden Lichtstrahlen in alle Richtungen verbreitern, so dass ein Pixel einen größeren Bereich des Abbilds registriert, verwendet. Hiermit kann jedoch nicht die erforderliche Richtungsabhängigkeit der Filterung erreicht werden. Daher werden vor allem Filter verwendet, die auf dem Prinzip der Doppelbrechung in Kristallen basieren. Ein eintreffender Strahl wird durch den Filter in bspw. zwei oder vier ausgehende Strahlen aufgeteilt, womit eine richtungsabhängige Filterung erreicht wird, welche für übliche Pixelanordnungen bereits bessere Ergebnisse liefert. Ein derartiges Verfahren ist in der JP 10 229 525 A offenbart.

In der US 5 915 047 A wird ein Bildaufnahmegerät offenbart, bei dem durch Variation des Abstands der Objektivlinse zu einem Bildsensor das Auftreten eines Moire-Musters erkannt wird. Die Höhe des Moire-Effekts kann anschließend durch eine Bewegung der Objektivlinse, d.h. eine Defokussierung des Abbilds, unter einen erwünschten Schwellewert reduziert werden.
Die US 5 834 761 A offenbart ein Verfahren zur optischen Orts- frequenz-Filterung bei einem Bildaufnahmegerät wobei der Bild- sensor und das auf ihn projizierte Abbild während der Bildauf- nahme in der Pixelebene relativ zueinander bewegt werden, wobei zwei oder vier Teilbilder erfaßt werden, die zu einem hochau- flösenden Gesamtbild zusammengefaßt werden, somit erfolgt die Bewegung der Teilbilder auf dem Bildsensor während der Bildauf- nahme,der Aufnahme eines vollständigen Bilds.

Mit diesen Verfahren kann jedoch kein gewünschter ortsabhängiger Filterverlauf erreicht werden.

Eine Möglichkeit, die Wirksamkeit einer jeden optischen Vorfilterung zu erhöhen, besteht darin, Bildsensoren mit einer größeren als der erwünschten Auflösung (Ergebnis) zu verwenden. Die Filterleistung steigt mit dem Verhältnis zwischen der Feinheit bzw. Frequenz des Pixelrasters und des Ergebnisrasters. Diese Lösung führt allerdings zu einer geringeren Lichtempfindlichkeit, da bei Sensoren mit mehr Pixeln die effektive lichtempfindliche Fläche des Sensors aufgrund der notwendigen Zuleitungen auf dem Sensor abnimmt, da letztere eine gleichbleibend große Fläche je Pixel benötigen. Weiterhin führt diese Lösung zu einem erhöhten Datenverarbeitungsbedarf und damit einhergehend zu der Notwendigkeit, eine leistungsfähigere Elektronik mit erhöhtem Energiebedarf zu verwenden.

Ein weiterer Nachteil bekannter optischer Vorfilterungen besteht darin, dass der Verlauf bzw. die Ausgestaltung der Filterkurve fest vorgegeben und nicht variabel ist. Es wäre hingegen vorteilhaft, die Ausgestaltung der Filterung an die Situation anpassen zu können. Beispielsweise erfordern Portraitaufnahmen eine starke Unterdrückung von Aliasingartefakten bei geringerer Anforderung an die Schärfe, wohingegen bei Aufnahmen von Totalen mit vielen feinen Details und wenig regelmäßigen Strukturen, wie Landschaftsaufnahmen, meist nur wenig Aliasingartefakte auftreten und eine möglichst hohe Schärfe im Vordergrund steht.

### Offenbarung der Erfindung

Es besteht daher die Aufgabe, eine verbesserte optische Vorfilterung bzw. Ortsfrequenzfilterung zur Verfügung zu stellen.

Erfindungsgemäß werden ein Verfahren zur Ortsfrequenzfilterung und ein Bildaufnahmegerät mit den Merkmalen der unabhängigen Patentansprüche vorgestellt.

Die nachfolgend aufgeführten Erläuterungen und Vorteile beziehen sich auf alle erfindungsgemäßen Lösungen, soweit es nicht ausdrücklich anders beschrieben ist. Das erfindungsgemäße Bildaufnahmegerät weist entsprechende Mittel zum Durchführen der beschriebenen Schritte auf.

Es wird ein Verfahren zur Ortsfrequenzfilterung bei einem Bildaufnahmegerät mit einem Objektiv, das ein erfasstes Bild auf einen oder mehrere optoelektronische Bildsensoren mit lichtempfindlichen Pixeln projiziert, vorgeschlagen. Wenigstens ein optoelektronischer Bildsensor und das vom Objektiv auf ihn projizierte Abbild werden während der Bildaufnahme in der Pixelebene, insbesondere regel- bzw. steuerbar, relativ zueinander bewegt. Dies ist in der Praxis durch eine Bewegung des Bildsensors bei festem Abbild, oder einer Bewegung des Abbildes bei festem Bildsensor, oder durch eine Kombination beider Bewegungen realisierbar. Jede Möglichkeit weist bestimmte Vorteile auf, die weiter unten im einzelnen diskutiert werden. Dabei nimmt der Bewegungsvektor der Relativbewegung vorbestimmbare Aufenthaltsorte mit einer jeweils vorbestimmbaren Aufenthaltsdauer bzw. Geschwindigkeit ein. Der Bewegungsvektor beschreibt somit eine geschlossene Trajektorie bzw. Bewegungsbahn, die zur Charakterisierung der Bewegung herangezogen werden kann.

Jedes Pixel des Sensors bewegt sich relativ zum Abbild bzw. das Abbild bewegt sich relativ zum Sensor, so dass ein Sensorpixel eine größere Fläche des Abbilds erfasst, als dies ohne Relativbewegung der Fall wäre. Die Orte des Bewegungsvektors mit geringerer Geschwindigkeit bzw. längerer Aufenthaltsdauer entsprechen Orten erhöhter Belichtungsdauer und damit auch erhöhter relativer Lichtempfindlichkeit eines Sensorpixels bezogen auf den entsprechenden Abbildort.

### Vorteile der Erfindung

Mittels entsprechender Vorgabe der Aufenthaltsorte und der diesen zugeordneten Geschwindigkeiten bzw. Verweildauern des Bewegungsvektors, in Zusammenhang mit der geometrischen Anordnung und dem ortsabhängigen Verlauf der Lichtempfindlichkeit der realen Pixel, kann ein beliebiger gewünschter Verlauf der ortsabhängigen Lichtempfindlichkeit eines Sensorpixels relativ zum Abbild erreicht werden.

Ein weiterer besonderer Vorteil der Erfindung liegt in der variablen Gestaltbarkeit der Trajektorie. Damit kann eine optische Vorfilterung erreicht werden, die an verschiedene Bildaufnahmesituationen und Betriebsarten der Kamera, wie weiter unten beschrieben, anpassbar ist.

Vorteilhafte Ausgestaltungen sind Gegenstand der Unteransprüche und der nachfolgenden Beschreibung.

Die Relativbewegung zwischen Sensor und Abbild kann auf vielfältige Weise z.B. mittels elektromagnetischer oder nach dem Piezoeffekt arbeitender Antriebselemente bewirkt werden. Damit kann ein Bildsensor bzw. ein optisches Element bei geringen Herstellungskosten auf beliebigen Bewegungsbahnen mit variabler Geschwindigkeit bewegt werden.

Zur Vereinfachung der Beschreibung wird folgend stets die relative Bewegung zwischen Sensor und Abbild gemeint, wenn von einer Bewegungsbahn oder Bewegung eines Sensors oder Pixels die Rede ist. Diese relative Bewegung kann auch mittels Bewegung eines dem Sensor vorgeschalteten optischen Elements bewirkt werden, falls dies nicht ausdrücklich ausgeschlossen wird. Hier sei beispielsweise auf die Möglichkeit verwiesen, herkömmliche Bildstabilisierungseinrichtungen, mit denen digitale Kameras bzw. Filmkameras ausgestatten sind, zu verwenden. Eine derartige Bildstabilisierungseinrichtung wird bspw. in der JP 2004 271 694 A gezeigt. Bei derartigen Einrichtungen sind dem Sensor vorgeschaltete optische Elemente, z. B. Linsen, Linsengruppen oder Prismen mechanisch verstellbar, insbesondere lateral bewegbar und/oder verschwenkbar, so dass Zitter- oder Schwenkbewegungen eines Benutzers der Kamera kompensiert werden können. Das heißt, eine herkömmliche Bildstabilisierungseinrichtung bewirkt, dass ein von einem Sensor erfasster Bildausschnitt konstant bleibt. Durch geeignete Umprogrammierung ist es möglich, mittels einer derartigen Einrichtung eine Relativbewegung des erfassten Bildes bezüglich des Sensors zu bewirken.

Prinzipiell ist die Erfindung mit allen Arten von digitalen Bildsensoren verwendbar. Da die Bewegungsbahnen einer erfindungsgemäßen Vorfilterung für alle Pixel eines Sensors zwangsläufig stets dieselben sind, sollte bei Sensoren mit Pixeln unterschiedlicher spektraler Lichtempfindlichkeit vorzugsweise jede Pixelart eine gleiche statische, ortsbezogene, relative Lichtempfindlichkeit und eine gleiche geometrische Anordnung auf der Sensorfläche und damit auch eine gleiche Pixelzahl haben.

Eine Trajektorie sollte, wie bereits oben erläutert, unter anderem in Abhängigkeit von dem gewünschten ortsbezogenen Lichtempfindlichkeitsverlauf eines Pixels relativ zum Abbild, von der geometrischen Anordnung der Nachbarpixel gleicher spektraler Empfindlichkeit und von der Pixelform und von eventuellen Lichtsammellinsen über den Pixeln ausgestaltet werden. Ist bspw. der Abstand eines Pixels zu seinen NachbarPixeln gleicher spektraler Sensitivität in horizontaler Richtung größer als in vertikaler Richtung, so sollte der Verlauf der Bewegungsbahnen diese Unsymmetrie berücksichtigen. Der Vorteil einer beliebig gestaltbaren Trajektorie besteht insbesondere darin, dass für jeden Bildsensortyp mit seinen spezifischen Pixelanordnungen und Parametern ein beliebiger gewünschter optischer Filterkurvenverlauf optimal erzielt werden kann.

Es sind unterschiedlichste Varianten für eine Trajektorie denkbar. So reicht es in vielen Fällen z.B. bereits aus, eine aus der Überlagerung einfacher Kreisbewegungen unterschiedlicher Frequenzen und Amplituden resultierende Trajektorie zu verwenden, um einen gewünschten ortsbezogenen Lichtempfindlichkeitsverlauf näherungsweise zu erzielen (siehe Beispiele weiter unten). Aus dem Zusammenhang des Aufenthaltsortes und der Aufenthaltsdauer einer solchen technisch realisierten Trajektorie und den physikalischen und geometrischen Eigenschaften eines Pixels kann ein auf das Abbild bezogenes ortsabhängiges relatives Lichtempfindlichkeitsprofil für ein Pixel abgeleitet werden, so dass die Qualität der Annäherung durch Vergleich mit dem gewünschten Lichtempfindlichkeitsprofil beurteilt werden kann.

Es ist zweckmäßig, die Bewegung eines Sensors oder optischen Elements mit der Belichtungszeit der Bildaufnahme zu synchronisieren, damit der durch die Bewegung erzielte ortsbezogene Verlauf der relativen Lichtempfindlichkeit eines Pixels relativ zum Abbild unabhängig von seiner Belichtungszeit ist. Dies ist technisch, insbesondere durch Geschwindigkeitsveränderung, einfach zu realisieren. Während einer Belichtung bzw. Bildaufnahme sollte die Trajektorie daher ganzzahlige Male (d.h. einfach oder mehrfach) durchlaufen werden.

Es ist besonders zweckmäßig, wenn eine auf die Vorfilterung abgestimmte Nachfilterung digital durchgeführt wird. Dies ist von Vorteil, da jedes unterschiedliche ortsbezogene Lichtempfindlichkeitsprofil auf spezifische Weise zu erwünschten und unerwünschten aufzunehmenden Strukturen im Sensorbildsignal führt. Erst wenn von der Bildverarbeitungselektronik die nachfolgende digitale Filterung in ihrer Charakteristik spezifisch auf die jeweils aktive optische Vorfiltercharakteristik abgestimmt wird, kann ein optimales Ergebnisbild erzielt werden. Die für die jeweilige digitale Nachfilterung erforderliche Charakteristik kann aus dem jeweiligen ortsbezogenen Lichtempfindlichkeitsprofil der optischen Vorfilterung berechnet werden.

Gemäß einer weiteren bevorzugten Ausführungsform werden wenigstens zwei nicht identische Zwischenbilder aufgenommen und zu einem Ergebnisbild verarbeitet. Die Zwischenbilder werden beispielsweise von einem Bildsensor nacheinander aufgenommen, der zwischen den Aufnahmen vorzugsweise um eine Pixelzeile verschoben wird. Die Zwischenbilder können ebenso von wenigstens zwei Bildsensoren aufgenommen werden. Beispielsweise können Vollfarbbilder, insbesondere mit einem Bayer-Sensor oder einem FOVEON X3-Bildsensor, Schwarz-Weiß-Bilder oder Teilfarbbilder aufgenommen werden. Vorzugsweise wird ein Schwarz-Weiß-Zwischenbild von einem Bildsensor und ein Rot/Blau-Zwischenbild von einem anderen Bildsensor aufgenommen oder erzeugt. Mit der Bereitstellung von wenigstens zwei nicht identischen Voll-, Teilfarb-, oder Schwarz-Weiß-Zwischenbildern können der Kontrast und/oder die Schärfe des Ergebnisbildes verbessert werden. Das Ergebnisbild verfügt vorteilhaft über weit mehr Informationen (Farbe, Helligkeitsbereich, Auflösung usw.) als jedes Zwischenbild für sich genommen.

Erfindungsgemäß wird auch ein Bildaufnahmegerät gemäß Anspruch 7 vorgestellt.

In vorteilhaften Ausgestaltungen weist das erfindungsgemäße Bildaufnahmegerät Mittel zur Durchführung von Ausgestaltungen des erfindungsgemäßen Verfahrens auf.

In einer vorteilhaften Ausführungsform weist das Bildaufnahmegerät Speichermittel zur Speicherung von Daten wenigstens einer Trajektorie bzw. Bewegungsbahn des Bildsensors bzw. optischen Elements auf. Die Bewegungsbahnen und damit der ortsbezogene Verlauf der Lichtempfindlichkeit eines Pixels relativ zum Abbild sind steuerbar, so dass unterschiedliche ortsbezogene Lichtempfindlichkeitsprofile erzielt werden können, wobei die dafür erforderlichen Parameter, insbesondere vom Kamerahersteller, abspeicherbar und vom Anwender wieder aufrufbar sind. In einer Ausführungsform der Erfindung sind z.B. drei unterschiedliche Bewegungsbahnen abrufbar. Bei einer für Landschaftsaufnahmen vorgesehenen Bewegungsbahn überdeckt ein Pixel bei der Bewegung z.B. nur einen Teil vom Ruhebereich von Nachbarpixeln gleicher spektraler Empfindlichkeit, so dass sich eine hohe Bildschärfe bei jedoch nur geringer Aliasartefakt-Unterdrückung ergibt. Bei einer weiteren für Normalaufnahmen vorgesehenen Bewegungsbahn überdeckt ein Pixel bei der Bewegung z.B. einen großen Teil der Ruhebereiche der nächsten Nachbarpixel. Diese Bewegungsbahn bietet einen für die meisten Bildszenen geeigneten Kompromiss zwischen Bildschärfe und Aliasartefakt-Unterdrückung. Bei einer dritten Bewegungsbahn überdeckt ein Pixel bei der Bewegung z.B. alle Ruhebereiche der nächsten und teilweise auch der weiter entfernten Nachbarpixeln. Diese Bewegungsbahn ermöglicht eine gewünschte Schärfereduzierung für Portraitaufnahmen bei bester Aliasartefakt-Unterdrückung. Es versteht sich, dass weitere feiner abgestufte Filtercharakteristiken bereitgestellt werden können. Es wird weiterhin vorgeschlagen, dass jede gespeicherte Trajektorie mit einer zugehörigen digitalen Nachfilterfunktion kombiniert wird. Bildaufnahmegeräte mit herkömmlichen optischen Filtern weisen diese Art der variablen Filterung bisher nicht auf.

Bei Kameras mit zwei oder mehr gleichartigen Bildsensoren sind je nach Betriebsmodus vorteilhafterweise weitere unterschiedliche Trajektorien bzw. Bewegungsbahnen ausführbar und abspeicherbar. So können z.B. Betriebsmodi für die Erfassung eines erhöhten Helligkeitsbereichs oder einer erhöhten Bildschärfe vorgesehen sein. In letzterem Fall werden z.B. die Pixel der Sensoren um einen gewissen Pixelabstand in einer gewissen Richtung gegeneinander versetzt, um auf bekannte weise aus den unterschiedlichen Daten der Sensorbilder ein Ergebnisbild höherer Bildschärfe zu erzeugen. In diesem Fall werden vorzugsweise Trajektorien verwendet, als hätte die Kamera nur einen einzigen Sensor mit entsprechend höherer Pixelzahl bzw. Pixeldichte, woraus sich Trajektorien mit geringerer Amplitude und anderer Form ergeben. Da hierbei die Trajektorien der Sensoren gleich sind, kann statt der Sensoren auch ein einzelnes optisches Element zur Verlagerung des Abbilds auf den Sensoren bewegt werden.

Bei Kameras bei welchen die Bildsensoren entsprechend der vorgesehenen Trajektorien mechanisch bewegt werden, wird vorzugsweise zumindest eine der mechanischen Vorrichtungen gleichzeitig auch zu einer während der Belichtungszeit konstanten Verlagerung eines Bildsensors relativ zu einem anderen Sensor um einen gewissen Betrag und eine gewisse Richtung verwendet. Dieser Betrag ist vorzugsweise abspeicherbar und wiederaufrufbar, so dass beliebig zwischen Betriebsmodi mit und ohne Sensorverlagerung umgeschaltet werden kann. Vorzugsweise ist zusätzlich ein konstanter Verlagerungsvektor abspeicherbar und wiederaufrufbar, mittels welchem ein unerwünschter, herstellungsbedingter mechanischer Versatz zwischen den Pixeln von zwei oder mehr Sensoren ausgeglichen werden kann, so dass bei der Herstellung nur eine exakt parallele Ausrichtung der Pixelzeilen bzw. Pixelspalten der Sensoren erfolgen muss.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand mehrerer Ausführungsbeispiele in der Zeichnung schematisch dargestellt und wird im folgenden unter Bezugnahme auf die Zeichnung ausführlich beschrieben.

### Im folgenden zeigt

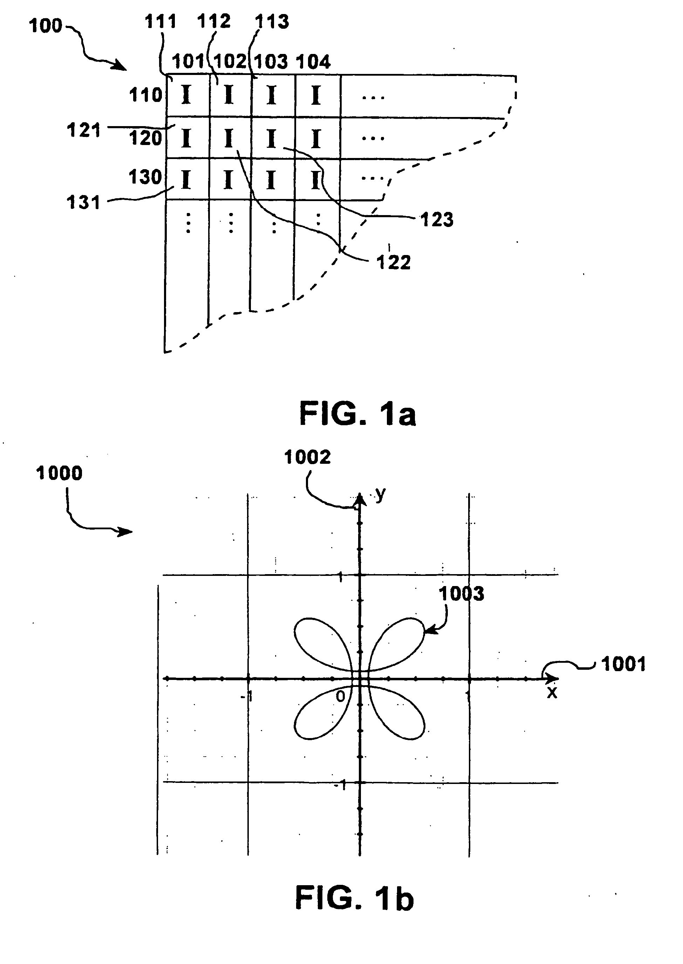

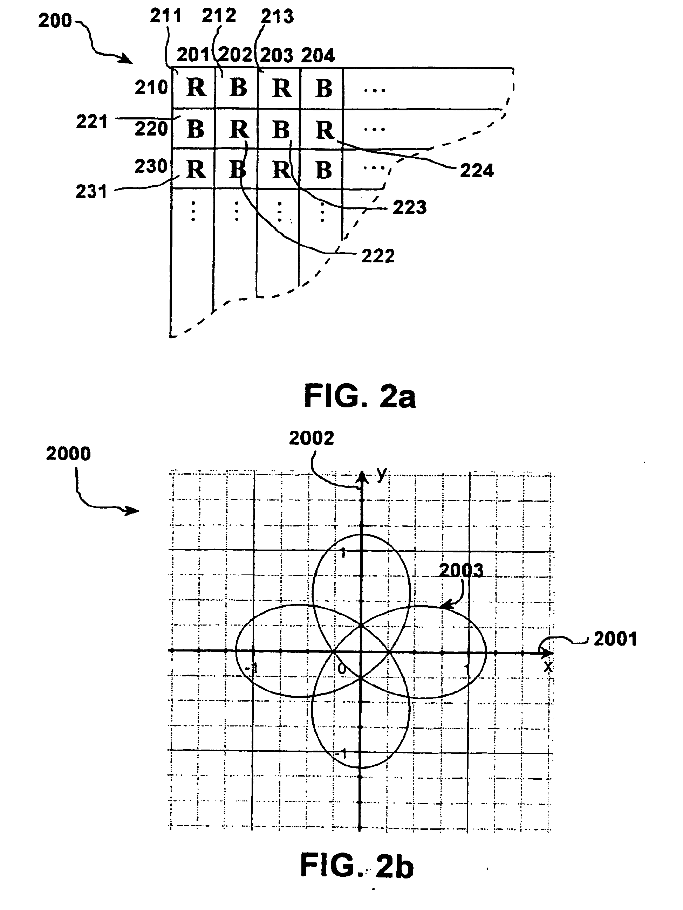

Figur 1a
   einen Ausschnitt eines ersten Bildsensors zur Verwendung mit einer Ausgestaltung der Erfindung;
Figur 1b
   ein Ausführungsbeispiel einer Trajektorie der Relativbewegung zwischen Sensor und Abbild für den Sensor gemäß Figur 1a;
Figur 2a
   einen Ausschnitt eines zweiten Bildsensors zur Verwendung mit einer Ausgestaltung der Erfindung;
Figur 2b
   ein Ausführungsbeispiel einer Trajektorie der Relativbewegung zwischen Sensor und Abbild für den Sensor gemäß Figur 2a; und
Figur 3
   ein Ausführungsbeispiel einer Kamera mit einem rotierendem Spiegelrad zur Bildverteilung auf zwei Bildsensoren.

In Figur 1a ist schematisch ein Ausschnitt eines ersten Bildsensors 100 gezeigt. Der Bildsensor 100 weist Pixel I gleicher spektraler Empfindlichkeit auf, die in einem quadratischen Raster angeordnet sind. Der Sensor 100 weist Sensorzeilen 110, 120, 130 usw. und Sensorspalten 101, 102, 103 usw. auf. In der Sensorzeile 110 sind gleichartige Pixel 111, 112, 113 usw., in der Sensorzeile 120 gleichartige Pixel 121, 122, 123 usw. nebeneinander angeordnet. Zwischen den einzelnen Pixeln liegen beispielsweise Zuleitungen und andere elektronische Komponenten, die in der schematischen Ansicht nicht gezeigt sind.

Derartige Sensoren zur Verwendung mit einer Ausgestaltung der vorliegenden Erfindung sind vorzugsweise mit Pixeln ausgestattet, welche gleichzeitig alle Farben oder nur einen gleichen Teilbereich des sichtbaren Spektrums registrieren können.

In Figur 2a ist schematisch ein Ausschnitt eines zweiten Bildsensors 200 gezeigt. Der Bildsensor 200 weist Pixel R und B unterschiedlicher spektraler Empfindlichkeit auf, die in einem quadratischen Raster angeordnet sind. Vorliegend weist der Sensor 200 z.B. Rotpixel R und Blaupixel B auf, die in Sensorzeilen 210, 220, 230 usw. und Sensorspalten 201, 202, 203 usw. abwechselnd angeordnet sind. In der Sensorzeile 210 sind abwechselnd Rotpixel 211, 213 usw. und Blaupixel 212, 214 usw., in der Sensorzeile 220 abwechselnd Blaupixel 221, 223 usw. und Rotpixel 222, 224 usw. nebeneinander angeordnet.

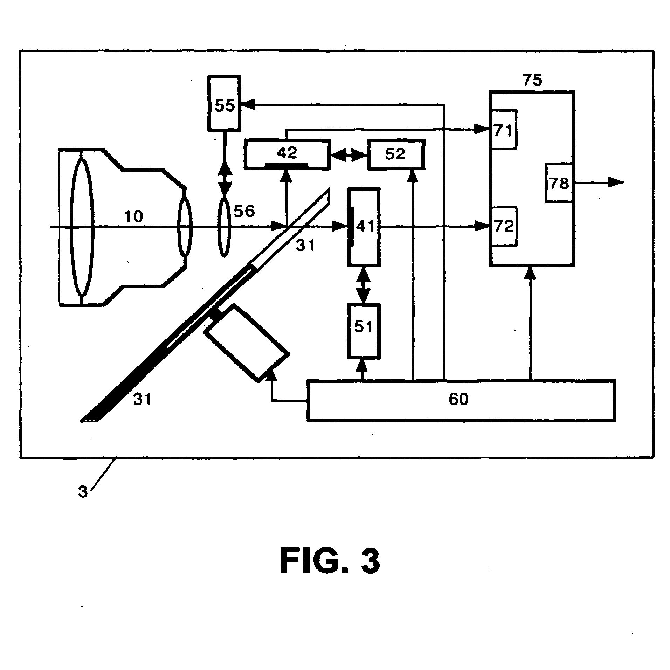

Der beschriebene zweite Sensor 200 kann zusammen mit einem Bildsensor 100 mit Schwarz-Weiß- oder Grünpixeln gemäß Figur 1a z.B. in einer Zweisensor-Kamera entsprechend Figur 3 verwendet werden, bei welcher auf bekannte weise aus den Bilddaten 71, 72 der zwei Sensoren 41, 42 ein einziges Ergebnisbild 78 ermittelt wird.

In Figur 1b ist ein Beispiel einer Trajektorie 1003 für einen Sensor gemäß Figur 1a in einem Diagramm 1000 gezeigt. Das Diagramm 1000 weist eine x-Achse 1001 und eine γ-Achse 1002 auf, die eine Ebene aufspannen. Es handelt sich dabei um die Sensorebene. Der Ursprung des Koordinatensystems, d. h. der Schnittpunkt der Achsen 1001 und 1002, ist der Ruhelage des Sensormittelpunkts zugeordnet. Da sich alle Einzelpixel eines Bildsensors in identischer Weise mit dem Sensormittelpunkt mitbewegen, kann der Ursprung ebenfalls dem Mittelpunkt eines Einzelpixels zugeordnet werden. Die Mittelpunkte benachbarter Einzelpixel sind gemäß den Koordinaten auf den Achsen 1001 und 1002 beabstandet. Liegt beispielsweise das Pixel 122 im Ursprung (0/0) des Koordinatensystems, liegt das Pixel 123 an der Position (1/0), das Pixel 112 an der Position (0/1) usw.

Die Trajektorie 1003 resultiert hier aus der Überlagerung von zwei Kreisbewegungen entsprechend
x = 0.42 cos(t) - 0.35 cos(3t)
y = 0.42 sin(t) + 0.35 sin(3t)

Es sei angemerkt, dass die verwendeten Zahlenwerte lediglich bevorzugte Beispiele allgemein darstellbarer Parameter a, b, c, d sind. Eine allgemeinere Formulierung ist in der Form x = a cos (t) - b cos (3t) bzw. y = c sin(t) + d sin(3t) darstellbar.

Die dargestellte Trajektorie ist näherungsweise kreuzartig ausgebildet, wobei die Hauptachsen des Kreuzes um 45° zu den Koordinatenachsen gedreht sind. Die vier Arme sind näherungsweise tropfenförmig ausgebildet, wobei die Form näherungsweise eine Überlagerung von vier Kreisen, deren Mittelpunkte gleich beabstandet auf den Koordinatenachsen liegen, entspricht. Es sei angemerkt, dass beispielsweise auch mit einer spiralförmigen Trajektorie oder mit Trajektorien jeglicher geeigneter Form die erfindungsgemäße Lehre verwirklicht werden kann.

Es spielt keine Rolle, in welcher Richtung die Trajektorie durchlaufen wird. Die Koeffizienten sind hier nur als Beispiel für hier angenommene Pixeleigenschaften und für ein hier angenommenes gewünschtes Lichtempfindlichkeitsprofil angegeben. Noch bessere Resultate liessen sich hier erzielen, wenn z.B. noch schnellere Kreisbewegungen geringerer Amplitude überlagert werden.

Bei diesem Beispiel erfasst ein Sensorpixel eine im Vergleich zur Größe seiner lichtempfindlichen Fläche erheblich größere Fläche des Abbilds und erstreckt sich damit auch auf Ruheorte der Nachbarpixel, wobei die resultierende Lichtempfindlichkeit vom Ruhezentrum aus abnimmt und wobei sie die aus der Geometrie der Pixelanordnung abgeleitete gewünschte Richtungsabhängigkeit aufweist.

In Figur 2b ist analog Figur 1b ein Beispiel einer Trajektorie 2003 für einen Sensor gemäß Figur 2a mit zwei unterschiedlich farbempfindlichen (R,B) Pixelarten in einem Diagramm 2000 gezeigt. Das Diagramm 2000 weist ebenfalls eine x-Achse 2001 und eine y-Achse 2002 auf, die eine Ebene aufspannen. Der Ursprung des Koordinatensystems ist wiederum der Ruhelage des Sensor- bzw. Pixelmittelpunkts zugeordnet. Liegt beispielsweise das R-Pixel 222 im Ursprung (0/0) des Koordinatensystems, liegt das B-Pixel 223 an der Position (1/0) wobei die nächstliegenden R-Pixel jedoch weiter entfernt an den Positionen 211, 213, 231 und 233 liegen.

Da beide Pixelarten (R,B) die gleiche geometrische Anordnung haben, führt die Trajektorie für jede Pixelart auch zu identischen Lichtempfindlichkeitsprofilen. Da die nächsten Nachbarpixel gleicher Farbempfindlichkeit weiter(ca. 1.4 mal) voneinander entfernt sind und auch in anderer Richtung (45 Grad) als beim Sensor gemäß Figur 1a liegen, muss auch ein anderes Lichtempfindlichkeitsprofil erreicht werden. Die entsprechende Trajektorie hat für diesen Sensor daher eine größere Ausdehnung und eine andere Richtungsorientierung. Sie resultiert hier ebenfalls aus der Überlagerung von zwei Kreisbewegungen, jedoch mit anderen Koeffizienten:
x = 0.48 cos(t) - 0.68 cos(3t)
y = 0.48 sin(t) + 0.68 sin(3t)

Auch hier sind die Zahlenwerte bevorzugte Werte allgemein darstellbarer Parameter a, b, c, d.

Die Trajektorie 2003 gemäß Figur 2b ähnelt der Trajektorie 1003 gemäß Figur 1b, wobei gewisse Unterschiede vorhanden sind. Bei der Trajektorie 2003 sind die Arme des Kreuzes parallel zu den Koordinatenachsen 2001, 2002 ausgerichtet. Die Form der Trajektorie kommt näherungsweise durch eine Überlagerung von vier Kreisen zustande, deren Mittelpunkte auf Diagonalen des Koordinatensystems liegen und deren Radien größer als die entsprechenden Radien aus Figur 1b sind.

Noch bessere Resultate ließen sich hier wie bei Figur 1 erzielen, wenn z.B. noch schnellere Kreisbewegungen geringerer Amplitude überlagert werden.

In anderen Ausgestaltungen können auch Trajektorien ganz anderer Art verwendet werden, um das gewünschte Lichtempfindlichkeitsprofil zu erreichen. Die Überlagerung zweier Kreisbewegungen wurde hier gewählt, da sie technisch besonders einfach zu realisieren ist und da sie bereits eine gute Annäherung an das hier gewünschte Ergebnis ermöglicht. Es versteht sich aber, dass die Trajektorien ebenso durch völlig andere Funktionen beschrieben werden können, und die hier beschriebenen Ausführungsformen lediglich beispielhaft und nicht als Einschränkung zu verstehen sind.

In Figur 3 ist eine Ausführungsform einer Digitalkamera bezeichnet, welche ein Beispiel einer erfindungsgemäßen optischen Vorfilterung aufweist und insgesamt mit 3 bezeichnet. Bei dieser Digitalkamera wird das von einem Objektiv 10 erfasste Bild über ein rotierendes Spiegelsektorrad 31 auf zwei Bildsensoren 41 und 42 projiziert. Der Bildsensor 41 ist als Schwarz-Weiß- oder Grün-Bildsensor gemäß Figur 1a und der Bildsensor 42 als RotBlau-Sensor gemäß Figur 2a ausgebildet. Gemäß der beschriebenen Ausgestaltung der Erfindung wird der Bildsensor 41 von einem Motor 51 während der Belichtung auf einer Trajektorie gemäß Figur 1b, der Bildsensor 42 von einem Motor 52 auf einer Trajektorie gemäß Figur 2b bewegt. Die jeweilige Bewegungsebene steht senkrecht auf der Zeichenebene.

Das schnell rotierende Spiegelsektorrad 31 ist mit reflektierenden und durchlässigen Sektoren ausgebildet, so dass das erfasste Bild während der Belichtungszeit möglichst mehrfach abwechselnd auf den Bildsensor 41 bzw. 42 projiziert wird, womit eine quasi gleichzeitige Belichtung beider Sensoren erfolgt.

Es ist vorgesehen, dass während der Belichtungszeit eines Bildes jeder Bildsensor stets das Licht von zumindest exakt einem vollständigen Zyklus seiner jeweiligen Bewegungsbahn empfängt. Im Gegensatz zu Kameras mit einem Prisma zur Abbildverteilung wird der Lichtfluss auf einen Sensor während eines solchen Zyklus jedoch während der Belichtungszeit durch ein Sektorrad-Segment einmal oder mehrfach unterbrochen bzw. abgeschwächt. Um ein von dem Sektorrad unbeeinflusstes Lichtempfindlichkeitsprofil der Sensorpixel zu gewährleisten wird vorzugsweise während einer Belichtungszeit eines Pixels stets eine geradzahlige Anzahl vollständiger Bewegungsbahnzyklen bzw. Trajektorien mit beliebigem Anfangspunkt ausgeführt. Zusätzlich haben Spiegelsektoren und Lückensektoren vorzugsweise gleiche Winkelbreiten und vorzugsweise beträgt der erfolgte Rotationswinkel des Sektorrades stets ein ungeradzahliges Vielfaches eines Spiegelsektorwinkels plus Lückensektorwinkels. Bei Kameras mit zwei rotierenden Spiegelsektorrädern zur Aufteilung des Abbilds auf 3 Abbilder gelten ähnliche Bedingungen.

Werden anstelle der beiden Sensoren 100 und 200 zwei identische Sensoren verwendet, so sind auch die erforderlichen Trajektorien identisch. In diesem Fall kann statt der Bewegung der Sensoren 41, 42 mittels der beiden Antrieben 52, 52 auch ein einziges, vom Antrieb 55 lateral bewegtes und vor dem Bildverteiler 31 plaziertes optisches Element 56 zur relativen Bewegung zwischen Abbild und Sensor verwendet werden. Natürlich können auch vor jedem Sensor ein eigenes optisches Element mit eigenem Antrieb vorgesehen werden. Letzteres würde wie im Fall getrennter Sensorantriebe auch einen wahlweisen statischen Versatz zwischen den Sensorpixeln der beiden Sensoren erlauben. Ein solcher Versatz kann dann auf bekannte Weise zur Erhöhung der Bildschärfe des Ergebnisbildes 78 verwendet werden, wie bereits weiter oben beschrieben. Aufgrund der motorgesteuerten Antriebe kann dieser Versatz jederzeit wieder zurückgenommen werden, um z.B. auf ebenfalls bekannte Weise ein Ergebnisbild zu erzielen, welches einen hohen Helligkeitsbereich darstellen kann.

Von den Bildsensoren 41 und 42 wird je ein Zwischenbild 71 bzw. 72 aufgenommen. Die Zwischenbilder 71 und 72 werden einer Bildverarbeitung 75 zugeführt, die daraus auf bekannte Weise ein Ergebnisbild 78 erzeugt. Die Digitalkamera entsprechend Figur 3 weist weiterhin eine Kamerasteuerungseinrichtung 60 auf, die zur Steuerung der Bildsensoren 41 und 42, der Motoren 51, 52 bzw. 55, der Bildverarbeitungseinrichtung 75 und weiterer Einrichtungen vorgesehen ist.

## Patentansprüche

1. verfahren zur Ortsfrequenzfilterung bei einem Bildaufnahmegerät (3) mit einem Objektiv (10), das ein erfasstes Bild auf einen oder mehrere optoelektronische Bildsensoren (100; 200; 41, 42) mit lichtempfindlichen Pixeln (111, 112, 113, ...; 211, 212, 213, ...) projiziert, wobei
wenigstens ein optoelektronischer Bildsensor (100; 200; 41, 42) und das auf ihn projizierte Abbild während der Bildaufnahme relativ zueinander in der Pixelebene bewegt werden,
**dadurch gekennzeichnet, dass** der Bewegungsvektor dieser Relativbewegung vorbestimmte Aufenthaltsorte mit einer jeweils vorbestimmten Aufenthaltsdauer einnimmt, so dass ein gewünschter ortsabhängiger Verlauf der Lichtempfindlichkeit eines Bildsensorpixels relativ zum Abbild mittels Variation von Aufenthaltsort und Aufenthaltsdauer des Bewegungsvektors der Relativbewegung bewirkt wird.

2. Verfahren nach Anspruch 1, **dadurch gekennzeichnet, dass** die Relativbewegung zwischen Bildsensors (100; 200; 41, 42) und Abbild durch Bewegen des Bildsensors (100; 200; 41, 42) in der Pixelebene und/oder durch Bewegen eines optischen Elements bewirkt wird.

3. Verfahren nach Anspruch 1 oder 2, **dadurch gekennzeichnet, dass** der Bewegungsvektor während der Bildaufnahme vorzugsweise einen oder mehrere vollständige Bewegungsbahnzyklen (1003; 2003) durchläuft.

4. Verfahren nach Anspruch 1, 2 oder 3, **dadurch gekennzeichnet, dass** die Relativbewegung mit einer Belichtungszeit der Bildaufnahme synchronisiert wird.

5. Verfahren nach einem der vorstehenden Ansprüche, **dadurch gekennzeichnet, dass** eine auf die Ortsfrequenzfilterung abgestimmte digitale Nachfilterung durchgeführt wird.

6. Verfahren nach einem der vorstehenden Ansprüche, **dadurch gekennzeichnet, dass** von wenigstens einem optoelektronischen Bildsensor (100; 200; 41, 42) wenigstens zwei nicht identische Zwischenbilder (71, 72) aufgenommen und zu einem Ergebnisbild (78) verarbeitet werden.

7. Bildaufnahmegerät, insbesondere Digitalkamera (3) mit einem Objektiv (10), das ein erfasstes Bild auf einen oder mehrere optoelektronische Bildsensoren (100; 200; 41, 42) mit lichtempfindlichen Pixeln (111, 112, ...; 211, 212, ...) projiziert, wobei
Mittel (51, 52 ,55) zur Erzeugung einer Relativbewegung zwischen wenigstens einem Bildsensor (100; 200; 41, 42) und des auf diesen projizierten Abbilds während der Bildaufnahme durch Bewegung wenigstens eines optoelektronischen Bildsensors (100; 200; 41, 42) in der Pixelebene und/oder wenigstens eines optischen Elements (56) zur Verlagerung des Abbilds auf einem Bildsensor (100; 200; 41, 42) in dessen Pixelebene vorgesehen sind, **dadurch gekennzeichnet, dass** die Mittel zur Erzeugung dieser Relativbewegung so ausgebildet sind, dass der Bewegungsvektor dieser Relativbewegung vorbestimmte Aufenthaltsorte mit einer jeweils vorbestimmten Aufenthaltsdauer einnimmt, so dass ein gewünschter ortsabhängiger Verlauf der Lichtempfindlichkeit eines Bildsensorpixels relativ zum Abbild mittels Variation von Aufenthaltsort und Aufenthaltsdauer des Bewegungs vektors der Relativbewegung bewirkt wird.

8. Bildaufnahmegerät nach Anspruch 7, **gekennzeichnet durch** Verwendung der Mittel zur relativen Bewegung zwischen Bildsensor und Abbild für die gleichzeitige Erzeugung einer zusätzlichen, zumindest während der Belichtungszeit der Bildaufnahme konstanten, Verlagerung zwischen Bildsensor und Abbild in der Pixelebene um einen vorgegebenen Betrag und in eine vorgegebene Richtung.

9. Bildaufnahmegerät nach Anspruch 7 oder 8, **gekennzeichnet durch** Speichermittel zur Speicherung von Daten wenigstens einer Bewegungsbahn eines Bildsensors und/oder eines optischen Elements zur Abbildverlagerung.

## Claims

1. Method for spatial frequency filtering with an image acquisition device (3) comprising a lens (10), which projects a captured image onto one or more opto-electronic image sensors (100; 200; 41, 42) having light-sensitive pixels (111, 112, 113, ...; 211, 212, 213, ....), wherein at least one opto-electronic image sensor (100; 200; 41, 42) and the image projected onto it are moved relative to one another in the pixel plane during the image acquisition, **characterised in that** the movement vector of this relative movement adopts predetermined positions with a predetermined duration in each case, such that a desired position-dependent course of the light sensitivity of an image sensor pixel relative to the image is effected by means of variation of the position and the duration of the movement vector of the relative movement.

2. Method according to claim 1, **characterised in that** the relative movement between the image sensor (100; 200; 41, 42) and the image is effected by moving the image sensor (100; 200; 41, 42) in the pixel plane and/or by moving an optical element.

3. Method according to claim 1 or 2, **characterised in that** the movement vector preferably runs through one or more complete trajectory cycles (1003; 2003) during the image acquisition.

4. Method according to claim 1, 2, or 3, **characterised in that** the relative movement is synchronised with an exposure time of the image acquisition.

5. Method according to any one of the preceding claims, **characterised in that** a digital post-filtering is carried out which is matched to the spatial frequency filtering.

6. Method according to any one of the preceding claims, **characterised in that** at least two non-identical intermediate images (71, 72) are acquired by at least one opto-electronic image sensor (100; 200, 41, 42) and processed to form a result image (78).

7. Image acquisition device, in particular digital camera (3) comprising a lens (10), which projects a captured image onto one or more opto-electronic image sensors (100; 200; 41, 42) having light-sensitive pixels (111, 112, ...; 211, 212, ...), wherein means (51, 52, 55) for producing a relative movement between at least one image sensor (100; 200; 41, 42) and the image projected onto it during the acquisition of the image by moving at least one opto-electronic image sensor (100; 200; 41, 42) in the pixel plane and/or at least one optical element (56), for displacing the image on an image sensor (100; 200; 41, 42) in its pixel plane are provided, **characterised in that** the means for producing said relative movement are designed in such a way that the movement vector of said relative movement adopts predetermined positions with a predetermined duration in each case, such that a desired position-dependent course of the light sensitivity of an image sensor pixel relative to the image is effected by means of variation of the position and the duration of the movement vector of the relative movement.

8. Image acquisition device according to claim 7,
**characterised by** using said means for said relative movement between the image sensor and the image for the simultaneous production of an additional displacement between the image sensor and the image in the pixel plane by a predetermined amount and in a predetermined direction, said displacement being constant at least during the exposure time of the image acquisition.

9. Image acquisition device according to claim 7 or 8, **characterised by** storage means for storing data of at least one trajectory of an image sensor and/or of an optical element for the image displacement.

## Revendications

1. Procédé de filtrage de fréquences spatiales utilisant un appareil de capture d'images (3) comportant une lentille d'objectif (10) qui projette une image acquise sur un ou plusieurs capteurs d'images optoélectroniques (100 ; 200 ; 41, 42) ayant des pixels photosensibles (111, 112, 113, ... ; 211, 212, 213, ...), comportant l'étape consistant à déplacer au moins un capteur d'image optoélectronique (100 ; 200 ; 41, 42) et l'image projetée sur celui-ci l'un par rapport à l'autre dans le plan des pixels pendant la capture d'image, **caractérisé en ce que** le vecteur de mouvement de ce mouvement relatif prend des points d'occupation prédéterminés avec une durée d'occupation respective prédéterminée, de manière à produire une courbe voulue de photosensibilité en fonction de la position d'un pixel de capteur d'image par rapport à l'image en faisant varier le point d'occupation et la durée d'occupation du vecteur de mouvement du mouvement relatif.

2. Procédé selon la revendication 1, **caractérisé en ce que** le mouvement relatif entre le capteur d'image (100 ; 200 ; 41, 42) et l'image est obtenu en déplaçant le capteur d'image (100 ; 200 ; 41, 42) dans le plan des pixels et/ou en déplaçant un élément optique.

3. Procédé selon la revendication 1 ou 2, **caractérisé en ce que** le vecteur de mouvement franchit de préférence un ou plusieurs cycles complets de trajectoire (1003 ; 2003) pendant la capture d'image.

4. Procédé selon la revendication 1, 2 ou 3, **caractérisé en ce que** le mouvement relatif est synchronisé avec un temps d'exposition de la capture d'image.

5. Procédé selon l'une quelconque des revendications précédentes, **caractérisé en ce qu'**un post-filtrage numérique adapté au filtrage de fréquences spatiales est réalisé.

6. Procédé selon l'une quelconque des revendications précédentes, **caractérisé en ce qu'**au moins un capteur d'image optoélectronique (100 ; 200 ; 41, 42) capture au moins deux images intermédiaires non identiques (71, 72) et les traite pour produire une image résultante (78).

7. Appareil de capture d'images, en particulier une caméra numérique (3) comportant une lentille d'objectif (10) qui projette une image acquise sur un ou plusieurs capteurs d'images optoélectroniques (100 ; 200 ; 41, 42) ayant des pixels photosensibles (111, 112, ... ; 211, 212, ...), dans lequel des moyens (51, 52, 55) sont prévus pour produire un mouvement relatif entre au moins un capteur d'image (100 ; 200 ; 41, 42) et l'image projetée sur celui-ci pendant la capture d'image en déplaçant au moins un capteur d'image optoélectronique (100 ; 200 ; 41, 42) dans le plan des pixels et/ou au moins un élément optique (56) afin de déplacer l'image sur un capteur d'image (100 ; 200 ; 41, 42) dans son plan de pixels, **caractérisé en ce que** les moyens pour produire ce mouvement relatif sont configurés de telle sorte que le vecteur de mouvement de ce mouvement relatif prend des points d'occupation prédéterminés avec une durée d'occupation respective prédéterminée, de manière à produire une courbe voulue de photosensibilité en fonction de la position d'un pixel de capteur d'image par rapport à l'image en faisant varier le point d'occupation et la durée d'occupation du vecteur de mouvement du mouvement relatif.

8. Appareil de capture d'images selon la revendication 7, **caractérisé par** l'utilisation des moyens pour le mouvement relatif entre le capteur d'image et l'image pour la production simultanée d'un déplacement supplémentaire, au moins pendant la durée d'exposition de la capture d'image, entre le capteur d'image et l'image dans le plan des pixels, selon une quantité prédéterminée et dans une direction prédéterminée.

9. Appareil de capture d'images selon la revendication 7 ou 8, **caractérisé par** des moyens de mémorisation pour mémoriser des données concernant au moins une trajectoire d'un capteur d'image et/ou d'un élément optique pour un déplacement d'image.
